# EUROPÄISCHE PATENTANMELDUNG

(11) **EP 3 616 529 A1**
(43) Veröffentlichungstag der Anmeldung: **04.03.2020**
(21) Anmeldenummer: 18191471.4
(22) Anmeldetag: 29.08.2018
(51) Int. Cl.: A23G 9/28, F04B 15/02, A47J 31/46, B67C 3/02

(54) **VERDRÄNGERDOSIERPUMPE UND VERWENDUNG DER VERDRÄNGERDOSIERPUMPE**

(71) Anmelder: INDAG Pouch Partners GmbH, 69214 Eppelheim (DE)
(72) Erfinder: Hartung-Rey, Sönke, 69123 Heidelberg (DE)
(74) Vertreter: Grünecker Patent- und Rechtsanwälte PartG mbB

(57) **Zusammenfassung**

In einer Verdrängerdosierpumpe (P) mit einem einen Produkteinlauf (6) und einem Produktauslauf (7) aufweisenden Zylindergehäuse (1), in welchem ein abgedichteter Verdrängerkolben (K) hin- und herverfahrbar ist, ist das Zylindergehäuse (1) mit einer darin festverbauten Kolbenstangendichtung (5) für den eine Kolbenstange (3) bildenden Verdrängerkolben und der Platzierung von Produktein- und -auslauf (6, 7) totraumfrei und selbstentleerend, d. h. CIP-hygienisch einwandfrei reinigbar.

## Beschreibung

Die Erfindung betrifft eine Verdrängerdosierpumpe gemäß Oberbegriff des Patentanspruchs 1 und die Verwendung gemäß Anspruch 13.

Es ist bekannt, für die diskontinuierliche volumetrische Dosierung von flüssigen bis pastösen, teilweise zusätzlich feststoffbeladenen Produkten, z. B. in der Lebensmittel- oder Getränkeindustrie, unter anderem Verdrängerdosierpumpen einzusetzen. Diese Verdrängerdosierpumpen arbeiten mit Kolben oder Kolben-Membran-Kombinationen, Schläuchen oder dergleichen. Nachteile bekannter Verdrängerpumpen dieses Prinzips sind, dass diese nicht gleichzeitig selbstentleerend und totraumfrei sind. Ein Totraum ist nach DIN EN 1672-2 definiert als ein Raum, in dem ein Produkt, Zutaten, Reinigungs- oder Desinfektionsmittel oder Verschmutzungen eingeschlossen, festgehalten oder aus dem sie nicht vollständig durch Reinigungsmaßnahmen entfernt werden können. Befindet sich der Totraum im produktführenden Zylindergehäuse oberhalb des höchsten Produktein- oder -auslaufs, kann hierin neben den in DIN EN 1672-2 genannten Medien auch Luft eingeschlossen werden. Aufgrund der Kompressibilität von Luft wird dadurch die Dosiergenauigkeit beeinflusst. Außerdem kann ein Luftpolster entstehen, das während einer CIP-Reinigung (cleaning in place) die vollständige Durchspülung verhindert. Deshalb werden diese Pumpen zumeist zur Heißdosierung eingesetzt, sodass das Produkt einen Sterilisiereffekt leistet, hingegen nicht zur Kaltdosierung, weil dann eine Verkeimung nicht zuverlässig ausgeschlossen werden kann. Somit erfüllen die erwähnten Verdrängerdosierpumpen festgeschriebene Hygieneanforderungen für Nahrungsmittelmaschinen, z. B. in Deutschland nach DIN EN 1672-2, nicht.

Eine in der Praxis von der Anmelderin eingesetzte Verdrängerdosierpumpe weist im in Betriebslage im Wesentlichen senkrecht verbautem Zylindergehäuse den Produkteinlauf und den Produktauslauf auf gleicher Höhe im oberen Ende des Zylindergehäuses auf. Der Verdrängerkolben ist in das untere Ende des Zylindergehäuses eingesetzt und weist eine kolbenringartige Kolbendichtung auf, die an der Innenwand des Zylindergehäuses abdichtet, wenn der Verdrängerkolben verfahren wird. Das Zylindergehäuse ist in einen Kopfteil und einen Unterteil unterteilt, die über eine Flanschverbindung mit einer eingesetzten Dichtung verbunden sind. Beim Verdrängerkolben liegt ein nicht selbstentleerender Totraum vor, in welchem angespülte Feststoffe durch eine CIP-Reinigung nicht entfernt werden können und sich anlagern. Im Bereich der Flanschverbindung liegt eine Hinterschneidung vor, in der sich Verunreinigungen absetzen können. Außerdem kann die Flanschverbindung nicht mit der Kolbendichtung des Verdrängerkolbens überfahren werden. Schließlich liegt auch oberhalb des Produkteinlaufs und Produktauslaufs ein Totraum vor. Aus diesem Baukonzept ergibt sich, dass die Verdrängerdosierpumpe nicht selbstentleerend ist und eine Heißdosierung erfordert.

Der Erfindung liegt die Aufgabe zugrunde, eine Verdrängerdosierpumpe der eingangs genannten Art zu schaffen, welche hygienische Anforderungen für Nahrungsmittelmaschinen problemlos erfüllt, eine exakte diskontinuierliche volumetrische Dosierung gewährleistet, und somit zur Heiß- und Kaltdosierung nutzbar ist.

Die gestellte Aufgabe wird mit den Merkmalen des Patentanspruchs 1 und der Verwendung gemäß Anspruch 13 gelöst.

Aufgrund des von oben in das Zylindergehäuse eintauchenden, ohne bewegliche Kolbendichtung und als Kolbenstange ausgebildeten Verdrängerkolbens, der in der im Zylindergehäuse festverbauten Kolbenstangendichtung abgedichtet wird, und mit entsprechenden Platzierungen des Produkteinlaufs und des Produktauslaufs lässt sich überraschend eine totraumfreie und selbstentleerende Verdrängerdosierpumpe schaffen. Die Verdrängerdosierpumpe erfüllt die genormten hygienischen Anforderungen für Lebensmittelmaschinen, z. B. nach DIN EN 1672-2, gewährleistet wegen Vermeidung eines Luftpolsters eine präzise Dosierung, und ist auch zur Kaltdosierung zu verwenden.

Zweckmäßig ist das Zylindergehäuse mit dem von oben in das Zylindergehäuse eintauchenden Verdrängerkolben hygienisch einwandfrei CIP-reinigbar, vorzugsweise über den oben platzierten Produkteinlauf und den unten platzierten Produktauslauf.

Dabei sind zweckmäßig der Produkteinlauf seitlich am oberen Ende des Zylindergehäuses bei der Kolbenstangendichtung und der Produktauslauf am unteren Ende des in im Wesentlichen senkrechter Betriebsposition verbauten Zylindergehäuses angeordnet. Dieses Konzept vermeidet nicht reinigbare Toträume und auch einen Totraum, in welchem sich ein Luftpolster halten kann, und resultiert in einer Selbstentleerungs-Funktion. Beim CIP-Reinigen lassen sich alle vom Produkt kontaktierten Oberflächen der Verdrängerdosierpumpe einwandfrei reinigen, und kann das Reinigungsmedium selbsttätig abfließen und alle Verunreinigungen austragen.

Im Hinblick auf die Vermeidung von Toträumen ist es zweckmäßig, dass die Zylinderachse des Zylindergehäuses in der Betriebsposition der Verdrängerdosierpumpe gegenüber einer Senkrechten schräg geneigt ist, vorzugsweise relativ zum Produkteinlauf unter einem Winkel von etwa 30°, derart, dass der höchste Punkt des Produkteinlaufs im Wesentlichen im oder beim höchsten Punkt des Innenraums des Zylindergehäuses 1 liegt.

In einer Ausführungsform ist das Zylindergehäuse über eine abgedichtete Flanschverbindung in einen die Kolbenstangendichtung und den Produkteinlauf aufweisenden Kopfteil und einen koaxialen Unterteil mit einem Zylinderabschnitt und einem endseitigen, in den Produktauslauf mündenden Auslauftrichter unterteilt. Speziell der Auslauftrichter bewirkt eine allmähliche Beschleunigung entweder des Produkts beim Verschieben des Verdrängerkolbens, was eine exakte Dosierung begünstigt, oder eines Reinigungsmediums in einem zügig ablaufenden Reinigungszyklus.

Im Übrigen ist es günstig, wenn der Durchmesser des Verdrängerkolbens kleiner ist als der Innendurchmesser zumindest des Kopfteils des Zylindergehäuses, sodass der Verdrängerkolben die Innenwand des Zylindergehäuses nicht kontaktiert und sogar die Flanschverbindung gefahrlos überfahren kann.

Zweckmäßig ist die Kolbenstangendichtung eine in einem Sitz im Kopfteil festgelegte Gleitbuchse, und steht der zylindrisch ausgebildete Verdrängerkolben mit seinem unteren Ende in seiner oberen Hub-Endlage geringfügig über die Kolbenstangendichtung nach unten vor. Allerdings kann der Verdrängerkolben in der oberen Hub-Endlage auch bündig mit dem inneren Ende der Kolbenstangendichtung abschließen, um die Reinigbarkeit noch weiter zu verbessern.

In einer zweckmäßigen Ausführungsform ist der Unterteil länger als der Kopfteil, sodass die Flanschverbindung relativ nahe beim Produkteinlauf liegt.

Im Hinblick auf die Vermeidung von Toträumen und zur Begünstigung der Selbstentleerung sowie zur Schaffung turbulenzarmer Strömungsverhältnisse ist es zweckmäßig, wenn sich der Innendurchmesser des Kopfteils im Bereich der Mündung des Produkteinlaufs in Richtung zur Kolbenstangendichtung allmählich verringert, vorzugsweise über eine gerundete und mit der Mündung des Produkteinlaufs verschnittene Schulter, und wenn angrenzend an den Sitz der Kolbenstangendichtung in der Verschneidung des Produkteinlaufs mit der Schulter ein gerundeter Wulst vorgesehen ist, sodass in der Betriebsposition des Zylindergehäuses das innere Ende der Kolbenstangendichtung im Bereich der Verschneidung in etwa auf der Höhe oder geringfügig unterhalb der Kontur des Wulsts liegt.

In einer Ausführungsform ist der am Kopfteil angebrachte, zweckmäßig einstückig angeformte, Produkteinlauf ein Rohrstutzen mit einem in der Betriebsposition in etwa senkrechten Anfangsteil mit einem Verbindungsflansch für ein Einlaufventil und einem gegenüber dem Anfangsteil abgewinkelten Endteil, wobei die Achse des von oben in den Kopfteil mündenden Endteils mit der Zylinderachse einen spitzen Winkel einschließt, vorzugsweise von etwa 45°.

In einer Ausführungsform führt der Produktauslauf am unteren Ende des Zylindergehäuses zu einem Auslaufventil.

Schließlich kann eine in der Flanschverbindung verbaute Dichtung in etwa mit dem Innendurchmesser des Zylindergehäuses bündig sein oder sogar gegenüber diesem vortreten, sodass hier hinterschnittene Toträume zuverlässig ausgeschlossen sind. Diese Dichtung wird durch den Verdrängerkolben nicht kontaktiert, der sich mit radialem Abstand zur Innenwand im Zylindergehäuse bewegt.

Anhand der Zeichnung wird eine Ausführungsform des Erfindungsgegenstandes erläutert. Es zeigen:
- Fig. 1: einen Schnitt einer erfindungsgemäßen Verdrängerdosierpumpe in Betriebsposition, mit einem Verdrängerkolben in der oberen Hub-Endlage, und
- Fig. 2: einen Schnitt der Verdrängerdosierpumpe in einer unteren Hub-Endlage des Verdrängerkolbens.

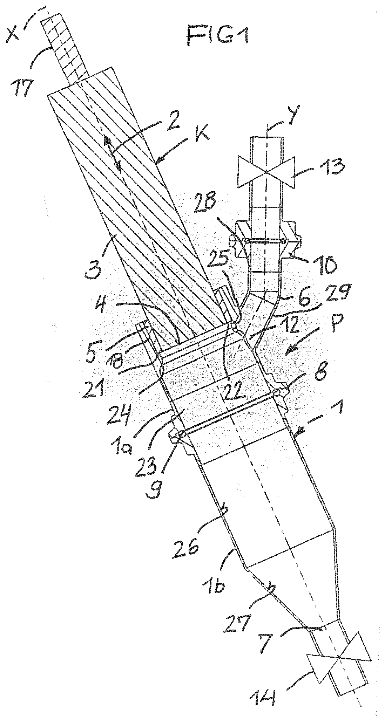

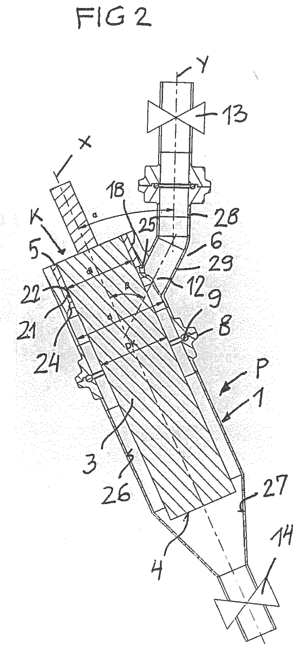

Eine in den Fig. 1 und 2 jeweils im Schnitt gezeigte Verdrängerdosierpumpe P, insbesondere zur diskontinuierlichen volumetrischen Dosierung flüssiger bis pastöser, teilweise feststoffbeladener Produkte, beispielsweise in der Nahrungsmittelindustrie, kann in der Betriebsposition schräg geneigt gegenüber einer Senkrechten verbaut sein, z.B. mit einem Winkel α von etwa 30°.

Die Verdrängerdosierpumpe P weist als Hauptbestandteile ein rohrförmiges Zylindergehäuse 1 sowie einen in Richtung des Doppelpfeils 2 im Zylindergehäuse 1 verfahrbaren Verdrängerkolben K auf. Der Verdrängerkolben K ist in seinem Arbeitsbereich als Kreiszylinder und nach Art einer Kolbenstange ausgebildet, deren im Zylindergehäuse 1 liegendes Ende 4 eben und im Wesentlichen senkrecht zur Zylinderachse X sein kann. Das Zylindergehäuse 1 ist über eine Flanschverbindung 8 mit einer Dichtung 9 in einen Kopfteil 1a und einen Unterteil 1b unterteilt, wobei hier z. B. der Unterteil 1b länger ist als der Kopfteil 1a. Im Kopfteil 1a ist eine Kolbenstangendichtung 5 fest verbaut und mündet seitlich ein Produkteinlass 6 unmittelbar angrenzend an die Kolbenstangendichtung 5. Der Unterteil 1b weist anschließend an die Flanschverbindung 8 einen Zylinderabschnitt 26 auf, an den sich zum unteren Ende des Unterteils 1b ein Auslauftrichter 27 anschließt, der zu einem Auslaufventil 14 führt. Angrenzend an die Kolbenstangendichtung 5 ist an der Seite des Kopfteils 1a beim Produkteinlauf 6 ein gerundeter Wulst 25 vorgesehen. Der Produkteinlauf 6 weist einen Flansch 10 zum Anschließen eines Einlaufventils 13 auf, das beispielsweise mit zumindest im Wesentlichen senkrechter Positionierung verbaut ist. Der Winkel α, mit welchem das Zylindergehäuse 1 gegenüber der Senkrechten schräg gestellt ist, kann etwa 30° betragen. Dieser Winkel α ist nicht als beschränkend aufzufassen, sondern kann auch größer oder kleiner als 30° sein.

Die Fig. 1 und 2 verdeutlichen die obere Hub-Endstellung des Verdrängerkolbens K und die untere Hub-Endstellung des Verdrängerkolbens K bei einem Dosiertakt. Die bei einem Dosiertakt abgegebene Dosis kann durch Verstellen der unteren Hub-Endstellung des Verdrängerkolbens K und/oder durch eine entsprechende Steuerung der Einlauf- und Auslauf-Ventile 13, 14 gewählt werden.

Die Kolbenstangendichtung 5 ist z. B. eine Gleitbuchse, die in einem falzartigen inneren Sitz 18 des Kopfteils 1a fest verbaut ist, wobei der Sitz 18 zur Positionierung der Kolbenstangendichtung 5 eine Schulter aufweisen kann. Im Innenraum 23 des Kopfteils 1a verringert sich der Innendurchmesser d des Kopfteils 1a in Richtung zur Kolbenstangendichtung 5 über eine gerundete Schulter 24, die in die Schulter 21 einläuft. An der rechten Seite, an der der Produkteinlauf 6 in den Kopfteil 1 mündet, ist dort, wo die Mündung 12 des Produkteinlaufs 6 bei dessem höchsten Punkt mit dem Kopfteil 1a verschnitten ist, lokal ein gerundeter Wulst 25 vorgesehen. Der Produkteinlauf 6 ist zweckmäßig einstückig am Kopfteil 1a angeformt und hat die Form eines Rohrstutzens mit einem in etwa vertikalen Anfangsteil 28 mit dem Flansch 10 (die Senkrechte ist durch eine strichpunktierte Linie Y angedeutet), und einem Endteil 29, der gegenüber dem Anfangsteil 28 abgewinkelt ist und mit der Zylinderachse X einen Winkel β einschließt, der in der gezeigten Ausführungsform, ohne Beschränkung, etwa 45° betragen kann. Der Wulst 25 ist so angeordnet, dass das dort liegende Ende 22 (Innendurchmesser di) der Kolbenstangendichtung 5 zumindest in etwa auf der Höhe des tiefsten Punkts der Kontur des Wulsts 25 liegt. Der Verdrängerkolben K wird zum Beispiel durch einen damit verschraubten Stößel 17 angetrieben.

Die Dichtung 9 in der Flanschverbindung 8 kann wie gezeigt (CIP-reinigbar) möglichst nahe am Innendurchmesser d platziert oder mit diesem bündig sein, oder sogar vortreten, da der Durchmesser DK des Verdrängerkolbens K kleiner ist als der Durchmesser d im Kopfteil 1a und dem Zylindergehäuse 1, sodass der Verdrängerkolben K die Flanschverbindung 8 problemlos überfahren kann.

Falls beispielsweise nach einer vorbestimmten Einsatzzeit der Verdrängerdosierpumpe P oder für einen Produktwechsel ein Reinigungszyklus auszuführen ist (CIP-Reinigung) wird das Reinigungsmedium unter Druck vom Produkteinlauf 6 bis durch den Produktauslauf 7 gefördert. Sämtliche vom Produkt kontaktierten Oberflächen in der Verdrängerdosierpumpe P können den strikten Vorgaben für Nahrungsmittelmaschinen entsprechend hygienisch einwandfrei gereinigt werden, da die Verdrängerdosierpumpe P totraumfrei und selbstentleerend ist. Es fließt alles sauber und ohne Rückstände ab.

Ein wesentlicher Vorteil dieses Konzepts der Verdrängerdosierpumpe wird anwenderseitig darin gesehen, dass sie nicht nur zur Heißdosierung, sondern überraschend auch zur Kaltdosierung verwendbar ist.

Die Dosiergenauigkeit ist gleichbleibend hoch, da keine ein Luftpolster haltenden Toträume vorliegen.

## Patentansprüche

1. Verdrängerdosierpumpe (P), insbesondere zur diskontinuierlichen volumetrischen Dosierung flüssiger bis pastöser, teilweise feststoffbeladener Produkte, mit einem einen Produkteinlauf (6) und einen Produktauslauf (7) aufweisenden in im Wesentlichen senkrechter Betriebsposition verbauten Zylindergehäuse (1), in welchem ein abgedichteter Verdrängerkolben (K) hin- und herverfahrbar ist, **dadurch gekennzeichnet, dass** das Zylindergehäuse (1) mit einer darin festverbauten Kolbenstangendichtung (5) für den eine Kolbenstange (3) bildenden Verdrängerkolben (K) und den Platzierungen von Produkteinlauf und Produktauslauf (6, 7) totraumfrei und selbstentleerend ausgebildet ist.

2. Verdrängerdosierpumpe nach Anspruch 1, **dadurch gekennzeichnet, dass** in der Betriebsposition der Produkteinlauf (6) oben und der Produktauslauf (7) unten platziert sind, sodass zumindest das Zylindergehäuse (1) und der von oben in das Zylindergehäuse (1) eintauchende Verdrängerkolben (K) über den Produkteinlauf (6) und den Produktauslauf (7) hygienisch einwandfrei CIP-reinigbar sind.

3. Verdrängerdosierpumpe nach Anspruch 1, **dadurch gekennzeichnet, dass** der Produkteinlauf (6) seitlich am oberen Ende des Zylindergehäuses (1) unmittelbar bei der Kolbenstangendichtung (5) angeordnet ist und der Produktauslauf (7) das untere Ende des Zylindergehäuses (1) bildet.

4. Verdrängerdosierpumpe nach Anspruch 3, **dadurch gekennzeichnet, dass** die Zylinderachse (X) des Zylindergehäuses (1) in der Betriebsposition gegenüber der Senkrechten (Y) schräg geneigt ist, vorzugsweise um einen Winkel α von etwa 30°, derart, dass ein oberster Punkt des Produkteinlaufs (6) im Wesentlichen im oder beim höchsten Punkt des Innenraums (23) des Zylindergehäuses (1) liegt.

5. Verdrängerdosierpumpe nach Anspruch 1, **dadurch gekennzeichnet, dass** das Zylindergehäuse (1) über eine abgedichtete Flanschverbindung (8) in einen die Kolbenstangendichtung (5) und den Produkteinlauf (6) aufweisenden Kopfteil (1a) und einen koaxialen Unterteil (1b) mit einem Zylinderabschnitt (26) und einem endseitigen, in den Produktauslauf (7) mündenden Auslauftrichter (27) unterteilt ist.

6. Verdrängerdosierpumpe nach wenigstens einem der vorhergehenden Ansprüche, **dadurch gekennzeichnet, dass** der Durchmesser (DK) des Verdrängerkolbens (K) kleiner ist als der Innendurchmesser (d) des Zylindergehäuses (1) zumindest im Kopfteil (1a).

7. Verdrängerdosierpumpe nach wenigstens einem der vorhergehenden Ansprüche, **dadurch gekennzeichnet, dass** die Kolbenstangendichtung (5) eine in einem Sitz (18) im Kopfteil (1a) festgelegte Gleitbuchse ist, und dass der zylindrisch ausgebildete Verdrängerkolben (K) in seiner oberen Hub-Endlage mit seinem unteren Ende (4) geringfügig über die Kolbenstangendichtung (5) in den Innenraum (23) vorsteht oder mit der Kolbenstangendichtung (5) bündig abschließt.

8. Verdrängerdosierpumpe nach Anspruch 5, **dadurch gekennzeichnet, dass** der Unterteil (1b) länger ist als der Kopfteil (1a).

9. Verdrängerdosierpumpe nach Anspruch 5, **dadurch gekennzeichnet, dass** sich der Innendurchmesser (d) des Kopfteils (1a) im Bereich der Mündung (12) des Produkteinlaufs (6) in Richtung zur Kolbenstangendichtung (5) allmählich verringert, vorzugsweise über eine gerundete und mit der Mündung des Produkteinlaufes (6) verschnittene Schulter (24), dass angrenzend an den Sitz (18) der Kolbenstangendichtung (5) in der Verschneidung des Produkteinlaufes (6) mit der Schulter (24) ein gerundeter Wulst (25) vorgesehen ist, und dass in der Betriebsposition des Zylindergehäuses (1) das innere Ende (22) der Kolbenstangendichtung (5) in etwa auf der Höhe oder geringfügig unterhalb der Kontur des Wulsts (25) liegt.

10. Verdrängerdosierpumpe nach Anspruch 1, **dadurch gekennzeichnet, dass** der am Kopfteil (1a) angebrachte, vorzugsweise einstückig angeformte, Produkteinlauf (6) ein Rohrstutzen mit einem in der Betriebsposition in etwa senkrechten Anfangsteil (28) mit einem Verbindungsflansch (10) für ein Einlaufventil (13) und einem gegenüber dem Anfangsteil (28) abgewinkelten Endteil (29) ist, wobei die Achse des von oben in den Kopfteil (1) mündenden Endteils (29) mit der Zylinderachse (X) einen spitzen Winkel (β) einschließt, vorzugsweise von etwa 45°.

11. Verdrängerdosierpumpe nach Anspruch 5, **dadurch gekennzeichnet, dass** der Produktauslass (7) zu einem Auslassventil (14) führt.

12. Verdrängerdosierpumpe nach Anspruch 5, **dadurch gekennzeichnet, dass** eine in der Flanschverbindung (8) verbaute Dichtung (9) in etwa mit dem Innendurchmesser (d) des Zylindergehäuses (1) bündig ist.

13. Verwendung der Verdrängerdosierpumpe (P) nach wenigstens einem der vorhergehenden Ansprüche zur Heißdosierung oder Kaltdosierung.
